# EUROPEAN PATENT SPECIFICATION

(11) **EP 2 109 317 B1**
(45) Date of publication and mention of the grant of the patent: **30.12.2020**
(21) Application number: 08154316.7
(22) Date of filing: 10.04.2008
(51) Int. Cl.: H04N 19/37, H04N 19/186, H04B 7/06, H04B 7/08

(54) **IMPROVING VIDEO ROBUSTNESS USING SPATIAL AND TEMPORAL DIVERSITY**
VERBESSERUNG DER VIDEOBESTÄNDIGKEIT MIT RAUM- UND ZEITDIVERSITÄT
AMÉLIORATION DE LA SOLIDITÉ VIDÉO UTILISANT LA DIVERSITÉ SPATIALE ET TEMPORELLE

(43) Date of publication of application: 14.10.2009
(73) Proprietor: Sony Corporation, Tokyo 108-0078 (JP)
(72) Inventor: Wang, Zhaocheng, 70327, Stuttgart (DE); Hohl, Fritz, 70327, Stuttgart (DE); Stirling-Gallacher, Richard, 70327, Stuttgart (DE); Wang, Qi, 70327, Stuttgart (DE)
(74) Representative: Witte, Weller & Partner Patentanwälte mbB

(56) References cited:
- EP-A- 1 659 813
- WO-A-2004/045217
- WO-A-2007/137063
- GB-A- 2 407 007
- YAO WANG ET AL: "Wireless video transport using path diversity: multiple description vs. layered coding" IEEE ICIP 2002,, vol. 1, 22 September 2002 (2002-09-22), pages 21-24, XP010607250 ISBN: 978-0-7803-7622-9
- SHIWEN MAO ET AL: "Reliable transmission of video over ad-hoc networks using automatic repeat request and multi-path transport" VTC FALL 2001. IEEE 54TH. VEHICULAR TECHNOLOGY CONFERENCE. PROCEEDINGS. ATLANTIC CITY, NJ, OCT. 7 - 11, 2001; [IEEE VEHICULAR TECHNOLGY CONFERENCE], NEW YORK, NY : IEEE, US, vol. 2, 7 October 2001 (2001-10-07), pages 615-619, XP010562501 ISBN: 978-0-7803-7005-0
- EL AL A A ET AL: "Improving interactive video in ad-hoc networks using path diversity" MOBILE AD-HOC AND SENSOR SYSTEMS, 2004 IEEE INTERNATIONAL CONFERENCE O N FORT LAUDERDALE, FL, USA 25-27 OCT. 2004, PISCATAWAY, NJ, USA,IEEE, US, 25 October 2004 (2004-10-25), pages 369-378, XP010765246 ISBN: 978-0-7803-8815-4
- QINQING ZHANG ET AL: "Hybrid ARQ with Selective Combining for Fading Channels" IEEE JOURNAL ON SELECTED AREAS IN COMMUNICATIONS, IEEE SERVICE CENTER, PISCATAWAY, US, vol. 17, no. 5, 1 May 1999 (1999-05-01), XP011054967 ISSN: 0733-8716
- YAO WANG ET AL: "Error Control and Concealment for Video Communication: A Review" PROCEEDINGS OF THE IEEE, IEEE. NEW YORK, US, vol. 86, no. 5, 1 May 1998 (1998-05-01), XP011044024 ISSN: 0018-9219

## Description

### Field of the present invention

The present invention relates to the fields of wireless communication, video transmission, unequal error protection, time diversity, space diversity, non line of sight communication. The present invention especially relates to a transmitter for transmitting video data, a receiver for receiving video data, a method of transmitting video data and a method for receiving video data.

### Description of the related prior art

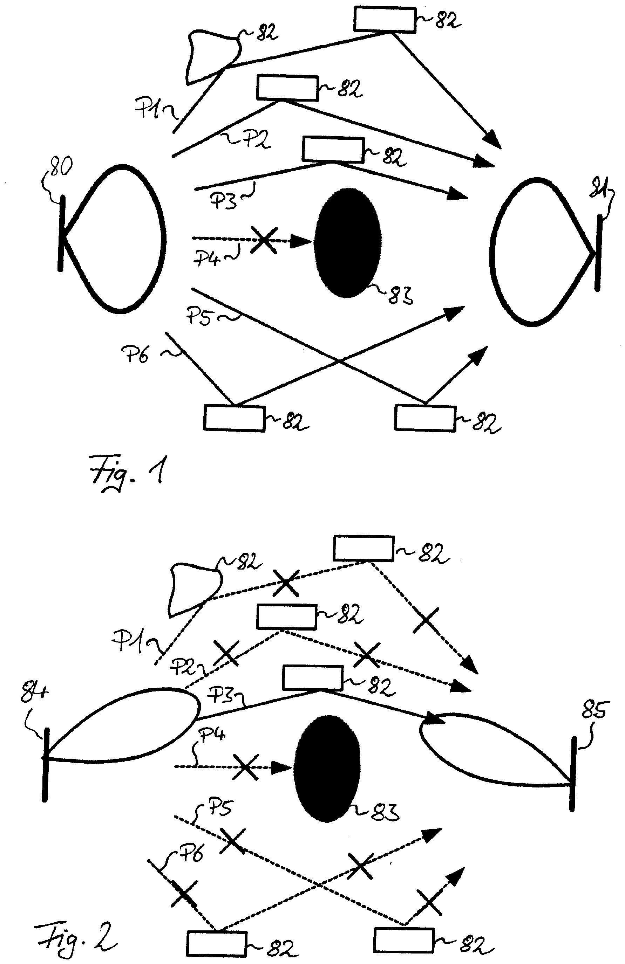

Conventional communication systems are known using a wide/omnidirectional beam antenna 80 at the transmitter (Tx) side and a wide/omnidirectional beam antenna 81 at the receiver (Rx) side as is shown in Fig. 1. A transmitted signal may be reflected by objects 82 which may cause a plurality of non line-of-sight (NLOS) transmission paths P1, P2, P3, P5, P6. When the data rate (e.g. over 1Gbps) is high, a symbol period may be short and a channel delay spread might be over tens of symbol periods, which leads to severe inter-symbol interference (ISI) due to deep frequency selective fading, especially, when the line-of-sight (LOS) transmission path P4 is blocked by an obstacle 83. In addition, the signal strength from the receiver side may degrade sharply when there are obstacles between the transmitter and receiver sides due to the inherent character of short wave (e.g. millimeter wave) wireless communication. As a consequence, the link budget requirement cannot be fulfilled for high rate applications (e.g. over 1Gbps).

For example from EP1659813A1, it is known in the state of the art to use sharp or narrow beam steering antennas 84, 85 at the Tx and Rx, as is depicted in Fig. 2, in order to overcome these problems. In such communication systems the narrow beam antennas provide a high antenna gain and, additionally, a tracking of the best or strongest transmission paths is carried out, so that only the best or strongest transmission paths are used for actual communication and the link budget requirement can be fulfilled even for high rate applications. Both narrow beam antennas 84, 85 are steered to an optimum position (optimum antenna beam direction) where the best or strongest reflection signal can be transmitted and received. As a result, only a very small number of reflection signals reach the receiver (in the example of Fig. 2 only the signal corresponding to transmission path P3 is transmitted by the antenna 84 and received by the antenna 85). Therefore, the channel delay spread is reduced dramatically, the complexity of the base band circuit can be reduced and low power consumption can be achieved. In addition, the signal strength can be kept high due to the high gain sharp beam antennas at the transmitter and receiver and the link budget requirement can be satisfied even for high rate applications (e.g. beyond 1 Gbps).

However, due to changes in the environment (e.g. moving or emerging objects 82 and/or obstacles 83) the transmission paths may be interrupted and video information may be lost so that the quality of a video signal as perceived by a human being is degraded. The interruption persists during a period (antenna search and switch period) in which an operable communication is determined and switched to.

The document US 20070204205 discloses a method for wireless communication wherein an unequal error protection (UEP) is applied to video information bits according to an importance level of the bits such that more important bits are provided with more protection for transmission error recovery. Applying unequal protection is achieved by using asymmetric coding and/or asymmetric constellation mapping. The method is applied to uncompressed video with 24 bits per pixel (i.e. 8 bits per pixel color component such as red, green and blue) whereby for each component the four bits of lower numerical significance correspond to a low importance level and the four bits of higher numerical significance correspond to a high importance level. Such UEP technology however cannot solve the issue of degraded quality of video signals since both the visually important bits of a pixel and the visually unimportant bits of a pixel are lost during the antenna search and switch period.

In their paper "reliable transmission of video over ad-hoc networks using automatic repeat request and multi-path transport" (IEEE Vehicular Technology Conference, 2001) Mao et al. disclose video transmission over ad-hoc networks with multiple paths between transmitter and receiver. The video data is coded into two priority classes, a high-priority base-layer and a low-priority enhancement-layer. The transmission of data packets from transmitter to receiver is subject to loss. If a high-priority packet is lost, the receiver actively sends a negative acknowledgement (ARQ, automatic re-peat request) to the transmitter. The transmitter then retransmits one copy of the same packet again. A retransmitted high-priority packet is transmitted over the channel used for low-priority packets i.e. the low-priority packet is discarded and the high-priority packet sent instead. Hence the respective low-priority packet is definitely lost and not transmitted at all. Hence, the system is well-suited for bandwidth limited communication channels as a retransmission does not increase the required bandwidth. For the case that the original high-priority packet is corrupted or lost, the same packet is retransmitted again. If this retransmitted packet is lost, the original packet is retransmitted over and over again, until reaching a time limit. The system requires a feedback path and buffer for buffering information until the (multi-) retransmission process is completed.

The paper "improving interactive video in a-hoc networks using path diversity" (IEEE International Conference on Mobile Ad-hoc and Sensor Systems, 2004), Abd El Al et al. disclose a mechanism that has the objective to minimize the overhead and maximize the reconstructed video quality. Hence, for minimum overhead, a non-redundant data transmission is employed in first place. However, as soon as the receiver detects a missing packet, the receiver sends a retransmission request to the sender. In order to resend a copy upon request, the system stores a copy of each packet in a retransmission buffer. Especially for transmission of uncompressed high definition video signals a considerable amount of buffer memory is required. The number of retransmission copies in this paper depends on the importance of the retransmitted data. A retransmission of high priority data is sent over a larger number of retransmission channels than low-priority data. Hence, the system bandwidth fluctuates depending on the number of retransmission copies currently being sent. If the receiver does not receive the retransmitted data as well, multiple retransmission trials are possible until reaching the maximum packet lifetime.

The document EP 1 659 813 A1 discloses a communication system that transmits several replicas of the same information signal over independently fading communication paths. Signals from different communication paths can be maximum-ratio combined at the receiver. The system is very robust in case one communication path is blocked as the same information is also transmitted over the other communication paths. Hence, the system requires a considerable amount of bandwidth.

WO 2004/045217 A1 discloses a transmission system with color depth scalability. It consists in splitting the original multi-components video signal (YUV) into several partial multi-component s video signals: at least a basic multi-components video signal and an enhancement multi-components video signals that are complementary to each other. Depending on a target display color depth, the application will transmit: - only a basic encoded stream generated from the basic multi-components video signal, - or both the basic encoded stream and an enhancement encoded stream generated from the enhancement multi-component video signal. At the reception the received streams are decoded and the recovered multi-components video signals are combined for display.

The problem to be solved by the present invention is to provide for an improved transmission of video data and, especially, for a higher robustness of transmission.

### Brief description of the present invention

The claimed subject matter is defined in the appended independent claims. Further refinements are provided in the dependent claims.

### Brief description the drawings

Fig. 1 shows a communication system according to the prior art using a wide beam antenna at the transmitter and at the receiver side, whereby paths with crosses are transmission paths not being used or being blocked.
Fig. 2 shows a communication system according to the prior art using a steerable narrow beam antenna at the transmitter side and the receiver side, whereby paths with crosses are transmission paths not being used or being blocked.
Fig. 3 shows a schematic diagram of an embodiment of the transmitter according to the present invention.
Fig. 4 shows a schematic diagram of an embodiment of the receiver according to the present invention.
Fig. 5 shows schematic diagram of a communication system comprising the embodiment of the transmitter and the embodiment of the receiver at a first instant of time.
Fig. 6 shows schematic diagram of the communication system comprising the embodiment of the transmitter and the embodiment of the receiver at a second instant of time.
Fig. 7 shows a flow diagram describing a processing of received video data in an embodiment of the present invention employing two antennas in the transmitter and in the receiver for providing spatial diversity.
Fig. 8 shows a flow diagram describing a processing of received video data in an embodiment of the present invention providing time diversity.
Fig. 9 shows a block diagram representing the method of transmitting video data according to the present invention.

### Description of the preferred embodiments

The present invention provides for a real time or streaming type transmission of video data. According to the present invention, transmitted video data is split into at least two classes, each class being split into one or more blocks. The blocks are transmitted using communication channels. For at least some blocks, a different number of communication channels is used depending on the class of the blocks. Different communication channels correspond to different transmission times (e.g. transmission time slots) and/or different transmit paths. This general system is in the following explained with reference to embodiments wherein mostly two classes are used. On the one hand, this simplifies the explanation of the present invention; on the other hand, this two class system already is a very powerful embodiment of the present invention. Advantageously, the classes are classes of importance. "Importance" may be conferred to the data, for example, by visual importance. The classes will also be called portions in the following.

The present invention may be applied to uncompressed video data. High definition (HD) video data today is typically represented by 24 bits per pixel, whereby 8 bits per pixel are used for each color component (pixel component) such as red, green and blue for example. Uncompressed video may however also be represented with more or less than 24 bits per pixel. For example it may be represented by 30 bits per pixel, corresponding to 10 bits per color component or by 36 bits per pixel, corresponding to 12 bits per color component. Color components can be treated differently when dividing the video data into the portions. The green color component is considered visually more important than the red and the blue color component and, eventually, the red color component is treated as visually more important than the blue color component. An advantage of treating color components differently over treating color components equally is that the perceived signal quality is increased when the data rate/amount of data is fixed or that the data rate/amount of data is reduced when the perceived signal quality is fixed. For example, n_g = 6 to 3 out of 8 bits of the green pixel component may be considered as visually important, n_r = 4 to 1 out of 8 bits of the red pixel component may be considered as visually important and n_b = 2 to 0 out of 8 bits of the blue pixel component may be considered as visually important, whereby n_g > n_r, n_g > n_b and, eventually, n_r > n_b. Hereby, the remaining bits of each pixel component is considered as not so visually important ("visually unimportant"). An example of values is n_g = 4, n_r = 2 and n_b = 0, which leads to ratio of 6/24 = 1/4 of the important bits of a pixel to the total number of bits of a pixel. This provides a very good tradeoff between additional resources needed and improvement of perceived robustness of transmission. For other than 8-bit quantizations, it is proposed that the ratio of the visually important bits to the total number of bits per pixel component is the same as in the example of the 8-bit quantization. Therefore, the ratio r_g for the green pixel component may be in the range of 6/8 to 3/8, the ratio r_r for the red pixel component may be in the range of 4/8 to 1/8 and the ratio r_b for the blue color component may be in the range of 2/8 to 0, whereby r_g > r_r, r_g > r_b and, eventually, r_r > r_b. The bits which are considered to be visually important are the bits which are of a (relatively) high numerical significance including the most significant bit (MSB) and the bits which are considered visually unimportant are the bits which are of a (relatively) low numerical significance comprising the least significant bit (LSB). Of course, when none of the bits of a numerical value (e.g. pixel component) is considered as visually important (e.g. n_b=0), the bits which are considered visually important are an empty set and do not comprise the MSB. As is known in the art, when a numerical value (e.g. pixel component) is represented by a plurality of bits of different numerical importance, the most significant bits are the bits corresponding to the highest numerical importances. Generally, the most significant bits may comprise zero, one, a plurality or all of the bits by which the numerical value is represented. Correspondingly, the least significant bits are the bits corresponding to the lowest numerical significances. Generally, the least significant bits may comprise zero, one, a plurality or all of the bits by which the numerical value is represented. In the two class system described here, the bits which are considered visually important are the most significant bits and the bits which are considered visually unimportant are the least significant bits, whereby, of course, the total number of the most significant bits and the least significant bits is the number of bits by which the numerical value (pixel component) is represented.

Basically the same teaching can be applied, when, instead of a color model comprising a green color component (e.g. RGB color model), a color model with a color component corresponding to brightness is used. An example of such system is the YUV or the YCbCr color model, where the Y-component corresponds to brightness. The brightness component is of more visual importance then the other color components. Thus, in the above teaching the green color component may be replaced by the brightness component and the red and blue color components may be replaced by the other color components. A difference of importance between the components other than the brightness component may be made according to circumstances but need not be made.

The present invention may also be applied to video data that is compressed based on a lossy compression scheme. Examples of compression schemes which may be used in connection with the present invention are compression schemes which use a "quality" parameter that results in an ordered list of bits in the compressed video data where the ordering relates exactly to the visual importance of the bits. This is often the case for discrete cosine transformation (DCT) based compression schemes. Thus, according to the order of the bits in the compressed video data, the bits can be mapped to two or more classes of visual importance. Typically, the quality parameter affects the size (amount) of the compressed video data. For example, a low quality parameter produces a compressed first portion of video data of a small size and a high quality parameter produces compressed video data of a large size comprising the first portion of video data and additional second portion of video data. At least some of the additional second portion of video data may be considered as visually unimportant (the additional second portion may comprise additional control information which may be vital for decompressing the compressed data so that it should be attributed to the first portion) and the first portion of video data may be considered as visually important. The parameter may take more than two values resulting in more than two classes of importance. However, for application of the present invention to lossy compression schemes there is not required a quality parameter. For example, a numerical value in the compressed video data which is represented by a plurality of bits may be treated such that the numerically more significant bits are considered visually important and the numerically less significant bits are considered visually less important or unimportant. This numerical value may, but need not, be a pixel value (e.g. pixel color value). Also in an embodiment using compressed video data, a data component corresponding to brightness (e.g. Y) may be considered more important than the other data color components (e.g. Cb and Cr). Similarly, a green color data component may be considered more important than a data component corresponding to a red color or blue color and the component corresponding to red color may be considered more important than the component corresponding to blue color. Thus, for example, the number of bits of the component corresponding to green color in the class of highest importance is larger than the number of bits of the component corresponding to red color in the class of highest importance and is larger than the number of bits of the component corresponding to blue color in the in the class of highest importance, whereby the number of bits of the component corresponding to red color in the in the class of highest importance may be larger than the number of bits of the component corresponding to blue color in the class of highest importance.

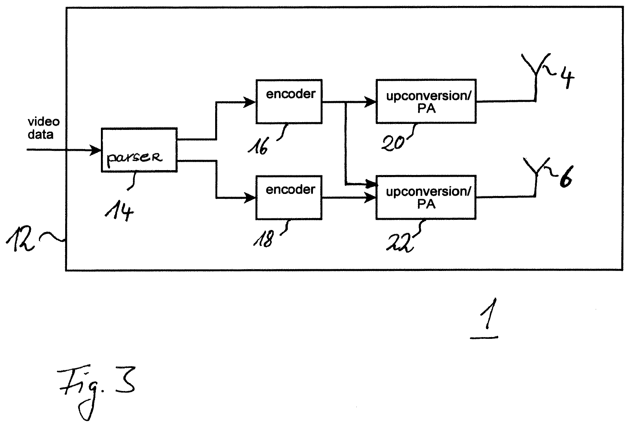

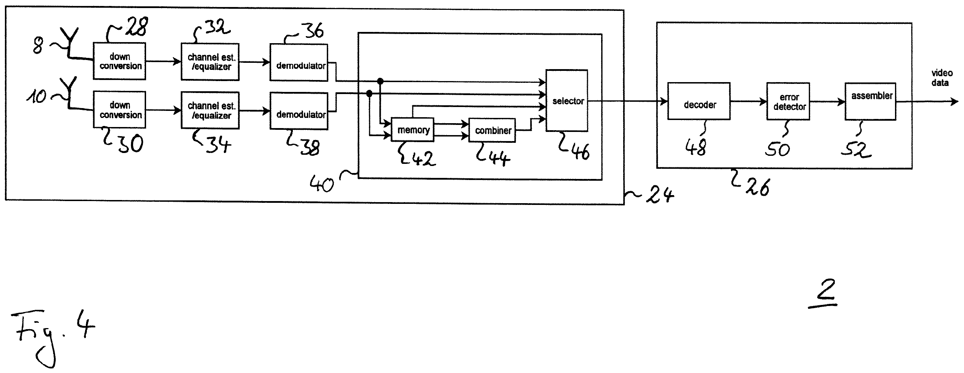

The receiver and the transmitter according to the present invention may be any kind of communication device. However, the present invention may be advantageously employed for wireless communication systems. An embodiment of a transmitter 1 according to the present invention is shown in Fig. 3 and an embodiment of a receiver 2 according to the present invention is shown in Fig. 4. The receiver 2 and the transmitter 1 may be any kind of wireless communication device. For example, the receiver 2 and/or the transmitter 1 may correspond to a mobile device or a stationary device. The receiver 2 and/or the transmitter 1, for example, may correspond to so called consumer electronics or to devices for professional use. As a non limiting example, the transmitter 1 may be a camcorder or a DVD, HD or BluRay player. As a non limiting example, the receiver 2 may be a display device (e.g. a television).

The transmitter 1 comprises a parser 14, which parses (analyzes) received video data and divides the video data into portions (classes) according to the above described principles, the portions are further subdivided in blocks. For each class there is given a different number of communication channels. Each block is transmitted using the number of communication channels of the corresponding class. Different communication channel correspond to different transmission time slots and/or different transmit and receive paths. Thus, the present invention deploys time diversity and/or spatial diversity for the transmission of at least some of the video data. The transmitter 1 is shown comprising two antennas 4, 6 corresponding to two transmit paths. Two or more transmit antennas 4, 6, however, are not required for all embodiments of the present invention. For example, in case of a purely time diversity based embodiment, one transmit antenna may be sufficient. Hence, the antenna 6 (and the corresponding encoder 18 and up-conversion/PA unit 22), for example, may be considered as optional. The receiver 2 is shown comprising two antennas 8, 10. Two or more receive antennas 8, 10, however, are not required for all embodiments of the present invention. For example, in case of a purely time diversity based embodiment, one receive antenna may be sufficient. Hence, the receive antenna 10 (and the corresponding down-converter 30, channel estimator/equalizer unit 34 and demodulator 38), for example, may be considered as optional. For some embodiments, at least some of the transmit antennas 4, 6 and the receive antennas are 8, 10 are implemented as steerable narrow beam antennas. A steerable narrow beam antenna provides a relatively small/narrow beam width (i.e. width of antenna main lobe), whereby the direction of the antenna beam is steerable (advantageously in two dimensions). For some embodiments, at least some of the transmit antennas 4, 6 and the receive antennas 8, 10 are implemented as wide beam antennas or omnidirectional antennas. For some embodiments, especially such using narrow beam antennas or steerable narrow beam antennas, the frequency of transmission (e.g. carrier frequency) may be high, for example, in the 60GHz range or even higher. Transmitter 1 and the receiver 2 may be standalone devices. The present invention however also encompasses the case where the transmitter 1 and the receiver 2 are part of a single communication device (two or more of such devices may then communicate with each other). In this case, the transmit antennas 4, 6 and the receive antennas 8, 10, advantageously, are the same entities (e.g. the transmit antenna 4 is the receive antenna 8).

The operation of an embodiment of the present invention providing time diversity is now explained. Given that that A signifies the visually important portion of a certain section (in time) of the video data and B signifies the visually unimportant portion of said section of video data, each portion is divided in a number of blocks. The transmission of the blocks of portion A is repeated one or more times. To distinguish between the abstract data and the data (signal) that is transmitted and received on a specific communication channel, the term 'block' is used to denote the abstract data and the term 'packet' is used to denote the latter. For each block of the portion A there are two or more corresponding packets. In case of the portion B this differentiation is not required, but may be made. For each packet (of at least the portion A), transmission errors can be separately detected by some means, for example, based on a CRC check sum. Examples of packet transmission orders assuming two A-type packets and nine B-type packets are as follows:

| | | | | | | | | | | | | | |
|---|---|---|---|---|---|---|---|---|---|---|---|---|---|
| A1 | A2 | B1 | B2 | B3 | B4 | B5 | B6 | B7 | B8 | B9 | | | (scheme 1, prior art) |
| A1 | A2 | B1 | B2 | B3 | B4 | B5 | B6 | B7 | B8 | B9 | A1 | A2 | (scheme 2) |
| A1 | A2 | B1 | B2 | B3 | B4 | A1 | A2 | B5 | B6 | B7 | B8 | B9 | (scheme 3) |
| A1 | B1 | B2 | A2 | B3 | B4 | A1 | B5 | B6 | A2 | B7 | B8 | B9 | (scheme 4) |

Time increases from left to right and each packet corresponds to one time slot. In a conventional scheme according to the prior art (scheme 1) each block is transmitted only once. In the scheme proposed by the present invention (schemes 1, 2 and 3) the transmission of the visually important blocks is repeated and temporal diversity is achieved for the visually important information. In scheme 2 the repeated packets are transmitted after all original packets from portion A and B have been transmitted. Such will minimize the memory needed to reassemble the video data from the received packets. Other repeating schemes could, for example, interleave the repeated packets in a way that the repeated packets come after some sequences of the original packets so that error bursts can affect original and repeated packets at the same time less often. Examples of such schemes are schemes 3 and 4. However, many other repeating schemes are possible. The operation using time diversity just described may, but need not, be implemented using a single antenna (e.g. antenna 4) at the transmitter 1 and a single antenna (e.g. antenna 8) at the receiver 2, which may be wide beam/omnidirectional antennas, (e.g. steerable) narrow beam antennas or any other kind of antennas.

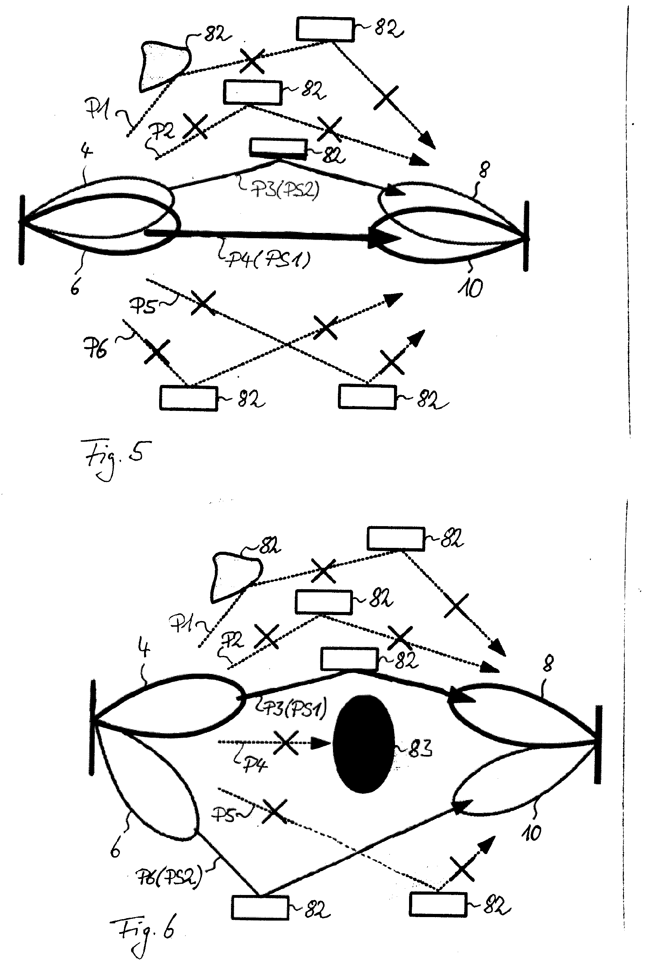

Additionally or alternatively to the use of time diversity, the present invention proposes the use of spatial diversity to increase the robustness of video transmission. The operation of an embodiment using spatial diversity is now explained in relation with Figs. 5 and 6 which show constellations of the same communication system comprising the transmitter 1 and the receiver 2 at two different times. Of the transmitter 1 and the receiver 2 only the antennas 4, 6, 8, 10 are shown schematically. The antennas 4, 6, 8, 10 are depicted in an "antenna diagram" or "radiation pattern" style indicating the beam direction. In this embodiment, the different transmit paths correspond to different transmit antennas 4, 6 with different antenna beam directions and the different receive paths correspond to different receive antennas 8, 10 with different antenna beam directions. The antennas 4, 6 as well as the antennas 8 and 10 are implemented as steerable narrow beam antennas, which are controlled so that the (narrow or sharp) antenna beams are steered into said different directions. However, a single steerable narrow beam antenna at the Tx side and a single steerable narrow beam antenna at the Rx side is generally possible too. A combination of a transmit antenna beam direction and a receive antenna beam direction corresponds to/defines a transmission path. All video data (i.e. in case of two classes both the visually important portion and the visually unimportant portion of the data) is transmitted using one transmission path PS1. In the example situation of Fig. 5, PS1 = P4. Simultaneously, the visually important portion of the video data is transmitted using a second transmission path PS2. In the example of Fig. 5, PS2 = P3. That is, the transmission paths PS1, PS2 and, therefore, the antennas 4 and 6 and the antennas 8 and 10 are operated simultaneously, at least partly. The transmission paths PS1 and PS2 may correspond to a first and second best transmission path, respectively, whereby the criteria of "goodness" may be, for example, based on received signal strength, the signal-to-noise ratio (SNR) and/or an achievable data rate of the transmission path. Even when the path PS2 not operable (e.g. due to blocking by a human obstacle), there is still all video data transmitted from the transmitter 1 to the receiver 2 via the transmission path PS1. Even in case that the transmission path PS1 is blocked, still the visually important portion of the video data is transmitted from the transmitter 1 to the receiver 2 via the transmission path PS2. Therefore, there is no loss of visually important video data during the antenna search and switch period and the quality of the video signal can be maintained at a good level. When the path PS1 becomes inoperable (e.g. is blocked by a moving obstacle), the previously second best transmission path will become the best transmission path PS1 (in the example situation of Fig. 6, PS1 = P3) which will be used (after the antenna switching is completed) to transmit all video data and another path will become the second best transmission path PS2 (in the example of Fig. 6, PS2 = P6) which will be used to transmit only visually important data. This must not be understood in a way that PS2 may not be used to additionally transmit other data than the visually important data. PS2 may, for example, be used to transmit data other than said video data.

Given that that A signifies the visually important portion of a certain section (in time) of the video data and B signifies the visually unimportant portion of said section of video data, each portion is divided in a number of blocks as described above. Each block of the portion A is transmitted on both transmission paths PS1 and PS2 (one packet per block and transmission path). The blocks of the portion B are transmitted only on the best or strongest transmission path PS1. For each packet (of the portion A at least), transmission errors can be separately detected by some means, for example, based on a cyclic redundancy check (CRC) check sum.

If the path PS2 is operated using the same bandwidth as the path PS1, the average data rate being sent over PS2 is lower than the average data rate sent via PS1 by a factor A, whereby $A = \left(number of visually important bits\right) / \left(total number of bits\right) .$

The average power for PS2 is therefore only A times the power for PS1 and the total transmission power required is only (1 - A) times the normal transmission power. This result basically holds also for the embodiment using time diversity described before. In this case, the total transmission energy for transmission of the section of video data is (1 + A) times the normal transmission energy.

Having described some basic principles and details of video data transmission according to the present invention, now the structure of the transmitter 1 and the receiver 2 (which operate in accordance with the principles and details described) are explained in more detail.

The transmitter 1 comprises a transmission section 12 comprising a parser 14, two encoders 16, 18, two up-conversion/power amplifier units 20, 22 and two antennas 4, 6, whereby the elements which are comprised twice are arranged in two parallel signal paths. As is described above, the antennas 4, 6 may, for example, be implemented by steerable narrow beam antennas. As described above, one of the parallel signal paths is optional. Also, further parallel (and same) signal paths may be provided. The parser 14 determines the class of importance of the bits of input video data (stream of video data) and divides the video data bits into the corresponding portions. The parser 14 forms blocks of video data comprising either visually important bits or visually unimportant bits and provides these blocks one or more times to the encoder 16 and/or the encoder 18 according to the principles described above/below. A block that is provided to one of the encoders 16, 18 is termed a packet. Each of the encoders 16, 18 encodes each packet separately based on an error correction code and based an error detection code. For packets corresponding to the same block, the same encoding is used to enable meaningful soft ratio combining of the packets in the receiver 2. As the error detection code, a CRC type code may be used. Each encoded packets is up-converted and amplified by the respective one of the up-conversion/power amplifier units 20, 22 and is sent (emitted) by the corresponding one of the (e.g. steerable narrow beam) antennas 4, 6.

The receiver 2 comprises a receiving section 24 and a decoding and validating section 26. Inter alia, the receiving section 24 comprises two antennas 8, 10 for receiving the signals (packets) transmitted by the antennas 4, 6, two down-converters 28, 30, two channel estimator/equalizer units 32, 34 and two demodulators 36, 38 which are arranged in two parallel signals paths. As is described above, one of the signal paths is optional. Also, further parallel (and same) signal paths may be provided. As described above, the antennas 8, 10 may, for example, be implemented as steerable narrow beam antennas which are steered to different directions of reception (beam directions). Advantageously in this case, each of the antennas 8, 10 is steered in a direction so as to receive the signal (packets) transmitted by a different one of the antennas 4, 6. The received signals (packets) are down-converted by the down-converters 28, 30. A channel estimation is obtained for each transmission path PS1, PS2 and the down-converted signals (packets) are equalized by the respective channel estimator/equalizer units 32, 34. Thereafter, the received signals (packets) are demodulated by the demodulators 36, 38 which are implemented as soft demodulators. For each packet received by the antenna 8 the soft demodulator 36 puts out corresponding soft information and for each packet received by the antenna 10 the soft demodulator 38 puts out corresponding soft information. The demodulated packets (soft information) are provided to a selector and combiner section 40. The selector and combiner section 40 comprises a memory 42, a maximum ratio combiner 44 and a selector 46. The selector and combiner section 40 is adapted to either provide the soft information corresponding to a packet to the decoding and validating section 26 or to combine the soft information corresponding to mutually redundant packets (i.e. packets which correspond to the same block) and provide the combined soft information (combined packet) to the decoding and validating section 26. The detailed operation of the selector and combiner section 40 will be described below. The decoding and validating section 26 comprises a decoder 48, an error detector 50 and an assembler 52. The decoder 48 decodes the packets (soft information) based on the error correction code used for encoding the packets and provides the decoded packets to the error detector 50 (decoding is the same for the uncombined and the combined soft information). The decoder 48 may be implemented as an error control decoder. In case the packet was encoded using an error detection code (e.g. A-type packet), the error detector 50 determines if the decoded packet is corrupted or not based on the error detection code used for encoding the packets (e.g. based on a CRC check sum). The error detector 50 provides the decoded packets to the assembler 52, which combines the various packets to recover the video data (stream of video data) as an output. The assembler 50 is provided at most one packet per block. A packet that is determined to be corrupted is not provided to the assembler 52, at least in case that there is a further possibility to determine (decode) the corresponding block.

The transmitter 1 and the receiver 2 may, for example, be implemented in hardware and/or software and by any techniques known to the skilled person now or in the future. Additional elements than the ones shown and described may be provided as part of the transmitter 1 and/or receiver 2. Some elements may be replaced by additional elements and some elements may be omitted without being replaced.

Having explained the structure of the transmitter 1 and the receiver 2, now the video data transmission according to the present invention is further explained, whereby especially receiver side aspects are described.

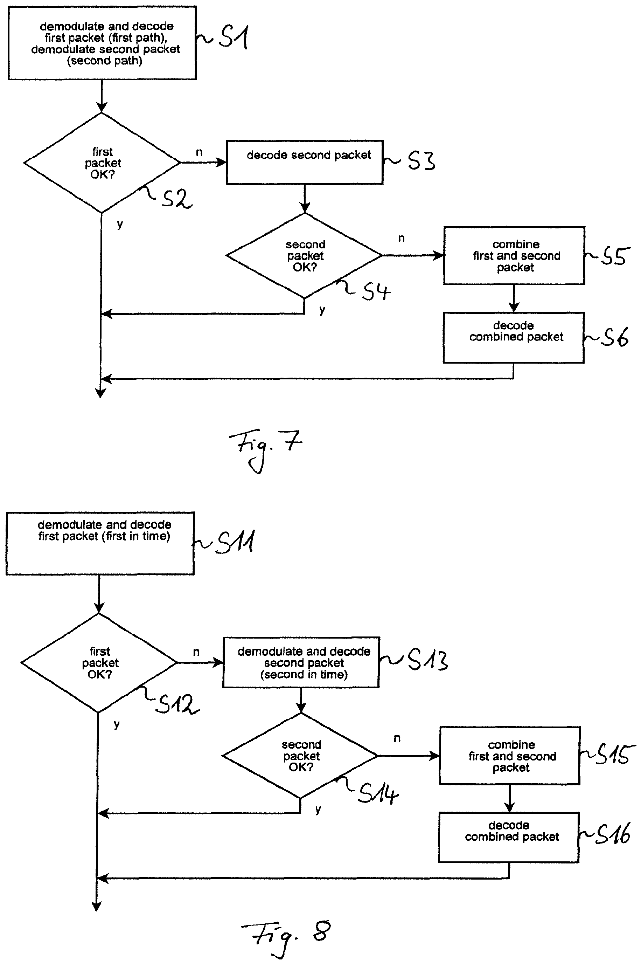

Fig. 7 shows a flow diagram describing a processing of received video data in the embodiment employing two antennas in the transmitter 1 and in the receiver 2 for providing spatial diversity.

In a step S1, a first packet which is a packet of the visually important bits (A-type packet) is demodulated by the demodulator (e.g. demodulator 36) corresponding to the best transmission path PS1 and is put out as corresponding first soft information to the selector and combiner section 40. The first soft information (demodulated first packet) is stored in the memory 42 and is selected by the selector 46 and put out to the decoder 48. The decoder 48 decodes the first packet (first soft information) and puts out the decoded first packet to the error detector 50. Further, a second packet which is corresponding to the same block as the first packet is demodulated by the demodulator (e.g. demodulator 38) corresponding to the second best transmission path PS2 and is put out as corresponding second soft information to the selector and combiner section 40. The second soft information (demodulated second packet) is stored in the memory 42. As described above , the transmission paths PS1, PS2 are operated in parallel. Reception and demodulation of the first and second packet is substantially simultaneous (different signal propagation delay for path PS1 and PS2 is possible). The processing proceeds to step S2.

In the step S2, the error detector 50 determines if the decoded first packet is corrupted or not. If no (i.e. when first packet is OK), the following steps S3 to S6 are bypassed and the decoded first packet is provided to the assembler 50. If yes, processing proceeds to step S3.

In the step S3, the second soft information (second packet) is selected by the selector 46 and put out to the decoder 48. The decoder 48 decodes the second packet and puts out the decoded second packet to the error detector 50. The processing proceeds to step S4.

In the step S4, the error detector 50 determines if the decoded second packet is corrupted or not. If no (i.e. when second packet is OK), the following steps S5 and S6 are bypassed and the decoded packet is provided to the assembler 50. If yes, processing proceeds to step S5.

In the step S5, the combiner 44 combines the first soft information and the second soft information according to a maximum ratio combination and provides the combined soft information (combined packet) to the decoder 48. The processing proceeds to step S6.

In the step S6, the decoder 48 decodes the combined packet (combined soft information) and puts out the decoded packet to the error detector 50, which forwards the decoded packet information to the assembler 52.

A processing according to Fig. 7 is carried out for each A-type block. According to the above processing, a spatial diversity for the visually important bits of video data is obtained and the probability for an error free transmission of the visually important bits is increased.

Each of the B-type packets of the visually unimportant bits is processed conventionally using one of the demodulators 36, 38 (the demodulator corresponding to the path PS1) and the decoder 48 and is provided to the assembler 52. The assembler 52 combines the A-type and the B-type packets to reestablish the stream of video data which is provided as output.

Fig. 8 shows a flow diagram describing a processing of received video data in an embodiment providing time diversity.

In a step S 11, a first packet, which was transmitted in a first time slot (first in time) and is a packet of the visually important bits (A-type packet), is demodulated by one of the demodulators 36, 38 demodulator (e.g. the demodulator 36) and is put out as the corresponding first soft information to the selector and combiner section 40. The demodulated first packet (first soft information) is stored in the memory 42 and is selected by the selector 46 and put out to the decoder 48. The decoder 48 decodes the first packet (first soft information) and puts out the decoded packet to the error detector 50. The processing proceeds to a step S12.

In step S 12, the error detector 50 determines if the decoded first packet is corrupted or not. If no (i.e. when the first packet is OK), the following steps S12 to S16 are bypassed and the decoded first packet is provided to the assembler 50. If yes, processing proceeds to step S13.

In step S13, a second packet, which was transmitted in a second time slot (second in time) and corresponds to the same block as the first packet, is demodulated by one of the demodulators 36, 38 (e.g. demodulator 36) and is put out as corresponding second soft information to the selector and combiner section 40. The demodulated second packet (second soft information) is stored in the memory 42. The processing proceeds to step S14.

In a step S14, the error detector 50 determines if the decoded second packet is corrupted or not. If no (i.e. when the second packet is OK), the following steps S15 to S16 are bypassed and the decoded second packet is provided to the assembler 50. If yes, the processing proceeds to step S15.

In step S15, the combiner 44 combines the first soft information and the second soft information according to a maximum ratio combination and provides the combined soft information (combined packet) to the decoder 48. The processing proceeds to step S16.

In step S16, the decoder 48 decodes the combined packet (combined soft information) and puts out the decoded packet to the error detector 50, which forwards the decoded packet to the assembler 52.

A processing according to Fig. 8 is carried out for each of the A-type packets. According to the above processing time diversity for the visually important bits of video data is obtained and the probability for an error free transmission of the visually important bits is increased.

Each of the B-type packets of the visually unimportant bits are processed conventionally using one of the demodulator 36, 38 (e.g. the demodulator 36) and the decoder 48 and are provided to the assembler 52. The assembler 52 combines the A-type and the B-type packets to reestablish the stream of video data which is provided as output.

It is noted that the processing of Fig. 8 also applies to a specific embodiment where both spatial and temporal diversity is provided. In this embodiment, the two packets of an A-type block are transmitted using different transmission paths (i.e. different antenna beam directions at the transmitter 1 and different antenna beam directions at the receiver 2) and different transmission time slots. A single steerable narrow beam antenna at each of the transmitter 1 and the receiver 2 is sufficient in this case.

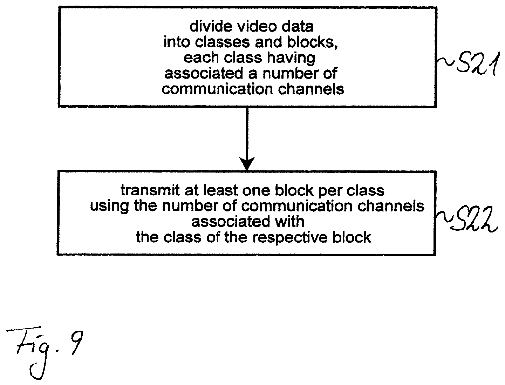

Fig. 9 shows a block diagram representing the method of transmitting video data according to the present invention. Fig. 9 should not be construed in a way that all actions of step S21 must be completed before any action of step S22 may be begun. In contrast, the actions may be performed in parallel if possible.

In a step S21, the video data is divided into at least two classes and each class is divided into one or more blocks, whereby with each class there is associated a different number ("number of communication channels").

In a step S22, at least one block of each class is transmitted once on each communication channel of a set of communication channels, the number of communication channels comprised in the respective set being given by the number ("number of communication channels") associated with the respective class. Different communication channels correspond to different transmission times and/or different transmit paths.

In embodiments providing both time and spatial diversity employing more than two communication channels (and possibly more than two classes) per block, there exist a variety of configurations of assigning the packets to transmission times and transmission paths, from which the skilled person may choose according to circumstances.

The present invention may be used for the transmission of video data comprising audio data. For example, according to an "audible importance" a part of the audio data may be allotted the class A, so that this data is part of the A-type packets, and another part may allotted the class B, so that this data is part of the B-type packets.

State of the art UEP schemes do not use spatial diversity. Therefore, when an antenna switching is needed in order to cope with connection losses, for example due to transmission path obstruction by moving objects, such schemes typically use video information during the switching. The present invention proposes to use spatial diversity, which results in a more robust video transmission, for example, when the antennas are switched.

State of the art UEP schemes yield temporal diversity by using a combination of channel coding and interleaving. However, in environments where bursts errors (e.g. caused by transmission path obstruction or antenna switching) are longer than the interleaver length, performance is poor. The present invention proposed an (extra) element of temporal diversity, whereby the transmission of packets comprising important video data is repeated at a later time. This repeated transmission of important bits, especially in combination with the multi (e.g. three stage) demodulation/combining processing (see Fig. 8), leads to a very robust performance.

State of the art UEP schemes need to use at least two different modulation or coding schemes in parallel. The present invention can be used with only one modulation scheme and one coding scheme, which results in an easier implementation.

State of the art UEP systems do not use the difference in visual perception of the brightness of pixels with respect to different colors and do not achieve the optimum splitting of important and unimportant video image information (e.g. important and unimportant bits of a color pixel) which is realized by the present invention.

## Claims

1. A transmitter (1) for transmitting video data comprising
a transmission section (12), said transmission section comprising a parser (14) for dividing said video data into at least two classes and dividing each class into one or more blocks, whereby
with each class there is associated a different number;
said transmission section is adapted to transmit at least one block of each class once on each communication channel of a set of communication channels, the number of communication channels comprised in the respective set being given by the number associated with the respective class;
wherein a pixel value is encoded in a number of bits comprising a most significant bit and a least significant bit and whereby said parser is configured to allocate said most significant bit to a first class of said at least two classes and said least significant bit to a second class of said at least two classes, said first class having associated a higher number of communication channels than said second class; and
different communication channels correspond to different transmission times and/or different transmit paths (PS1, PS2, P1, P2, P3, P4, P5, P6);
**characterized in that**
said video data comprises at least three components, each component corresponding to one dimension of a color representation, a first component of said color representation corresponds to green color, a second component corresponds to red color and a third component corresponds to blue color and whereby
in the class having associated the highest number of communication channels the number of bits is higher for said first component than for each of the other components and the number of bits is higher for said second component than for said third component.

2. A transmitter according to claim 1 comprising
one or more encoders (16, 18) for encoding at least some blocks of one or more of said classes, whereby each block is separately encoded based on an error detection code and said one or more classes are given by the classes having associated the one or more highest numbers of communication channels.

3. A transmitter according to any one of the claims 1 to 2 comprising
at least two antennas (4, 6), whereby different transmit paths correspond to different antennas.

4. A transmitter according to any one of the claims 1 to 3 wherein
different transmit paths correspond to different antenna beam directions.

5. A transmitter according to any one of the claims 1 to 4 wherein
different communication channels correspond to different transmit paths.

6. A transmitter according to any one of the claims 1 to 2 wherein
different communication channels correspond to different transmission times.

7. A transmitter according to any one of the claims 1 to 4 wherein
at least some pairs of communication channels correspond to different transmission times and different transmit paths.

8. A method of transmitting video data comprising steps of
dividing (S21) said video data into at least two classes and each class into one or more blocks,
whereby with each class there is associated a different number; and
transmitting (S22) at least one block of each class once on each communication channel of a set of communication channels, the number of communication channels comprised in the respective set being given by the number associated with the respective class;
wherein a pixel value is encoded in a number of bits comprising a most significant bit and a least significant bit and whereby said parser is configured to allocate said most significant bit to a first class of said at least two classes and said least significant bit to a second class of said at least two classes, said first class having associated a higher number of communication channels than said second class; whereby
different communication channels correspond to different transmission times and/or different transmit paths (PS1, PS2, P1, P2, P3, P4, P5, P6);
**characterized in that**
said video data comprises at least three components, each component corresponding to one dimension of a color representation, a first component of said color representation corresponds to green color, a second component corresponds to red color and a third component corresponds to blue color and whereby
in the class having associated the highest number of communication channels the number of bits is higher for said first component than for each of the other components and the number of bits is higher for said second component than for said third component.

## Patentansprüche

1. Sender (1) zum Übertragen von Videodaten, Folgendes umfassend:
einen Übertragungsabschnitt (12), wobei der Übertragungsabschnitt einen Parser (14) zum Aufteilen der Videodaten in mindestens zwei Klassen und zum Aufteilen jeder Klasse in ein oder mehrere Blöcke aufweist,
wobei mit jeder Klasse eine unterschiedliche Anzahl verknüpft ist;
wobei der Übertragungsabschnitt dazu ausgelegt ist, mindestens einen Block jeder Klasse einmal auf jedem Kommunikationskanal eines Satzes von Kommunikationskanälen zu übertragen, wobei die Anzahl der in dem jeweiligen Satz enthaltenen Kommunikationskanäle durch die mit der jeweiligen Klasse verknüpfte Anzahl gegeben ist;
wobei ein Pixelwert in einer Anzahl von Bits codiert ist, die ein höchstwertiges Bit und ein niedrigstwertiges Bit umfasst, und
wobei der Parser dazu ausgelegt ist, das höchstwertige Bit einer ersten Klasse der mindestens zwei Klassen zuzuweisen, und das niedrigstwertige Bit einer zweiten Klasse der mindestens zwei Klassen zuzuweisen, wobei mit der ersten Klasse eine höhere Anzahl von Kommunikationskanälen als mit der zweiten Klasse verknüpft ist; und
unterschiedliche Kommunikationskanäle unterschiedlichen Übertragungszeiten und/oder unterschiedlichen Übertragungspfaden (PS1, PS2, P1, P2, P3, P4, P5, P6) entsprechen;
**dadurch gekennzeichnet, dass**
die Videodaten mindestens drei Komponenten umfassen, wobei jede Komponente einer Dimension einer Farbdarstellung entspricht, eine erste Komponente der Farbdarstellung der Farbe Grün, eine zweite Komponente der Farbe Rot und eine dritte Komponente der Farbe Blau entspricht, und
wobei in der Klasse, die mit der höchsten Anzahl von Kommunikationskanälen verknüpft ist, die Anzahl von Bits für die erste Komponente höher als für jede der anderen Komponenten ist, und die Anzahl von Bits für die zweite Komponente höher als für die dritte Komponente ist.

2. Sender gemäß Anspruch 1, Folgendes umfassend:
einen oder mehrere Codierer (16, 18) zum Codieren von mindestens einigen Blöcken von einer oder mehreren der Klassen,
wobei jeder Block, basierend auf einem Fehlererkennungscode, getrennt codiert wird, und die ein oder mehreren Klassen durch die Klassen gegeben sind, mit denen die ein oder mehreren höchsten Anzahlen von Kommunikationskanälen verknüpft sind.

3. Sender gemäß einem der Ansprüche 1 bis 2, Folgendes umfassend:
mindestens zwei Antennen (4, 6),
wobei unterschiedliche Übertragungspfade unterschiedlichen Antennen entsprechen.

4. Sender gemäß einem der Ansprüche 1 bis 3,
wobei unterschiedliche Übertragungspfade unterschiedlichen Antennenstrahlrichtungen entsprechen.

5. Sender gemäß einem der Ansprüche 1 bis 4,
wobei unterschiedliche Kommunikationskanäle unterschiedlichen Übertragungspfaden entsprechen.

6. Sender gemäß einem der Ansprüche 1 bis 2,
wobei unterschiedliche Kommunikationskanäle unterschiedlichen Übertragungszeiten entsprechen.

7. Sender gemäß einem der Ansprüche 1 bis 4,
wobei mindestens einige Paare von Kommunikationskanälen unterschiedlichen Übertragungszeiten und unterschiedlichen Übertragungspfaden entsprechen.

8. Verfahren zum Übertragen von Videodaten, das die Schritte des Aufteilens (S21) der Videodaten in mindestens zwei Klassen und jeder Klasse in ein oder mehrere Blöcke umfasst,
wobei mit jeder Klasse eine unterschiedliche Anzahl verknüpft ist; und
beim Übertragen (S22) von mindestens einem Block jeder Klasse einmal auf jedem Kommunikationskanal eines Satzes von Kommunikationskanälen die Anzahl der in dem jeweiligen Satz enthaltenen Kommunikationskanäle durch die mit der jeweiligen Klasse verknüpfte Anzahl gegeben ist;
wobei ein Pixelwert in einer Anzahl von Bits codiert ist, die ein höchstwertiges Bit und ein niedrigstwertiges Bit umfasst, und
wobei der Parser dazu ausgelegt ist, das höchstwertige Bit einer ersten Klasse der mindestens zwei Klassen zuzuweisen, und das niedrigstwertige Bit einer zweiten Klasse der mindestens zwei Klassen zuzuweisen, wobei mit der ersten Klasse eine höhere Anzahl von Kommunikationskanälen als mit der zweiten Klasse verknüpft ist;
wobei unterschiedliche Kommunikationskanäle unterschiedlichen Übertragungszeiten und/oder unterschiedlichen Übertragungspfaden (PS1, PS2, P1, P2, P3, P4, P5, P6) entsprechen;
**dadurch gekennzeichnet, dass**
die Videodaten mindestens drei Komponenten umfassen, wobei jede Komponente einer Dimension einer Farbdarstellung entspricht, eine erste Komponente der Farbdarstellung der Farbe Grün, eine zweite Komponente der Farbe Rot und eine dritte Komponente der Farbe Blau entspricht, und
wobei in der Klasse, die mit der höchsten Anzahl von Kommunikationskanälen verknüpft ist, die Anzahl von Bits für die erste Komponente höher als für jede der anderen Komponenten ist, und die Anzahl von Bits für die zweite Komponente höher als für die dritte Komponente ist.

## Revendications

1. Emetteur (1) destiné à transmettre des données vidéo comprenant
une section de transmission (12), ladite section de transmission comprenant un analyseur syntaxique (14) pour diviser lesdites données vidéo en au moins deux classes et diviser chaque classe en un ou plusieurs blocs, moyennant quoi
à chaque classe est associé un nombre différent ; ladite section de transmission est adaptée pour transmettre au moins un bloc de chaque classe une fois sur chaque canal de communication d'un ensemble de canaux de communication, le nombre de canaux de communication compris dans l'ensemble respectif étant donné par le nombre associé à la classe respective ;
dans lequel une valeur de pixel est codée dans un nombre de bits comprenant un bit de poids fort et un bit de poids faible et moyennant quoi l'analyseur syntaxique est configuré pour attribuer ledit bit de poids fort à une première classe desdites au moins deux classes et ledit bit de poids faible à une seconde classe desdites au moins deux classes, à ladite première classe étant associé un nombre de canaux de communication supérieur à celui attribué à ladite seconde classe ; et
différents canaux de communication correspondent à différents temps de transmission et/ou à différents chemins de transmission (PS1, PS2, P1, P2, P3, P4, P5, P6) ;
**caractérisé en ce que**
lesdites données vidéo comprennent au moins trois composantes, chaque composante correspondant à une dimension d'une représentation chromatique, une première composante de ladite représentation chromatique correspond à la couleur verte, une seconde composante correspond à la couleur rouge et une troisième composante correspond à la couleur bleue et moyennant quoi
dans la classe à laquelle est associé le nombre le plus élevé de canaux de communication, le nombre de bits pour ladite première composante est supérieur à celui pour chacune des autres composantes et le nombre de bits pour ladite seconde composante est supérieur à celui pour ladite troisième composante.

2. Emetteur selon la revendication 1 comprenant
un ou plusieurs codeurs (16, 18) destinés à coder au moins certains blocs d'une ou plusieurs desdites classes, moyennant quoi chaque bloc est codé séparément en fonction d'un code de détection d'erreur et lesdites une ou plusieurs classes sont données par les classes auxquelles sont associés les un ou plusieurs nombres les plus élevés de canaux de communication.

3. Emetteur selon l'une quelconque des revendications 1 à 2 comprenant
au moins deux antennes (4, 6), moyennant quoi différents chemins de transmission correspondent à différentes antennes.

4. Emetteur selon l'une quelconque des revendications 1 à 3 dans lequel
différents chemins de transmission correspondent à différentes directions de faisceaux d'antennes.

5. Emetteur selon l'une quelconque des revendications 1 à 4 dans lequel
différents canaux de communication correspondent à différents chemins de transmission.

6. Emetteur selon l'une quelconque des revendications 1 à 2 dans lequel
différents canaux de communication correspondent à différents temps de transmission.

7. Emetteur selon l'une quelconque des revendications 1 à 4 dans lequel
au moins certaines paires de canaux de communication correspondent à différents temps de transmission et différents chemins de transmission.

8. Procédé de transmission de données vidéo comprenant des étapes de
division (S21) desdites données vidéo en au moins deux classes et chaque classe en un ou plusieurs blocs,
moyennant quoi à chaque classe est associé un nombre différent ; et
transmission (S22) d'au moins un bloc de chaque classe une fois sur chaque canal de communication d'un ensemble de canaux de communication, le nombre de canaux de communication compris dans l'ensemble respectif étant donné par le nombre associé à la classe respective ;
dans lequel une valeur de pixel est codée dans un nombre de bits comprenant un bit de poids fort et un bit de poids faible et moyennant quoi l'analyseur syntaxique est configuré pour attribuer ledit bit de poids fort à une première classe desdites au moins deux classes et ledit bit de poids faible à une seconde classe desdites au moins deux classes, à ladite première classe étant associé un nombre de canaux de communication supérieur à celui attribué à ladite seconde classe ; et
différents canaux de communication correspondent à différents temps de transmission et/ou à différents chemins de transmission (PS1, PS2, P1, P2, P3, P4, P5, P6) ;
**caractérisé en ce que**
lesdites données vidéo comprennent au moins trois composantes, chaque composante correspondant à une dimension d'une représentation chromatique, une première composante de ladite représentation chromatique correspond à la couleur verte, une seconde composante correspond à la couleur rouge et une troisième composante correspond à la couleur bleue et moyennant quoi
dans la classe à laquelle est associé le nombre le plus élevé de canaux de communication, le nombre de bits pour ladite première composante est supérieur à celui pour chacune des autres composantes et le nombre de bits pour ladite seconde composante est supérieur à celui pour ladite troisième composante.
